# FASCICULE DE BREVET EUROPEEN

(11) **EP 2 849 957 B1**
(45) Date de publication et mention de la délivrance du brevet: **02.01.2019**
(21) Numéro de dépôt: 13731354.0
(22) Date de dépôt: 15.05.2013
(51) Int. Cl.: B60D 1/14, B60D 1/44, B60D 1/00

(54) **DISPOSITIF DE TRANSPORT MUNI D'UN CROCHET D'ATTELAGE**
TRANSPORTVORRICHTUNG MIT EINER ANHÄNGERKUPPLUNG
TRANSPORT DEVICE EQUIPPED WITH A TOWING HOOK

(30) Priorité: 15.05.2012 FR 1254455
(43) Date de publication de la demande: 25.03.2015
(73) Titulaire: YTHALES INVEST, 37520 La Riche (FR)
(72) Inventeur: CHERBONNIER, Yves, F-37000 Tours (FR)
(74) Mandataire: den Braber, Gérard Paul
(86) Numéro de dépôt international: PCT/FR2013/051064
(87) Numéro de publication internationale: WO 2013/171430

(56) Documents cités:
- DE-U1-202008 012 180
- DE-U1-202010 000 400
- US-B1- 6 902 181
- US-B1- 7 909 350

## Description

### DOMAINE TECHNIQUE

Un aspect de l'invention concerne un dispositif de transport muni d'un crochet d'attelage. Le dispositif de transport peut être, par exemple, un chariot de manutention pour transporter des objets.

### ETAT DE LA TECHNIQUE ANTERIEURE

Un chariot de manutention est avantageusement muni d'un crochet d'attelage. Le crochet d'attelage permet d'établir une liaison de remorquage avec un autre chariot de manutention, ou un dispositif tracteur, muni d'un timon d'attelage. Pour établir cette liaison, le crochet d'attelage s'engage dans une ouverture présente dans le timon d'attelage. Ainsi, il est possible de créer une chaîne de chariots de manutention avec un dispositif tracteur en tête de cette chaîne.

La demande de brevet français publiée sous le numéro FR 2 800 676 A1 décrit un dispositif d'attelage pour chariot de manutention. Un timon prévu à l'avant du chariot est propre à coopérer avec un crochet prévu à l'arrière d'un tracteur, en particulier d'un chariot précédent dans une file de chariots. Le timon comporte une fente longitudinale. Le crochet peut coulisser dans cette fente longitudinale entre une position éloignée en laquelle le chariot est à une distance maximale du tracteur pendant le remorquage, et une position rapprochée en laquelle le chariot est à une distance minimale du tracteur pour diminuer l'encombrement à l'arrêt.

Le document DE 20 2008 012 180 U1 montre aussi un dispositif de transport et divulgue le préambule de la revendication 1.

### EXPOSE DE L'INVENTION

Il existe un besoin pour une solution pour établir une liaison de remorquage qui présente des avantages sur le plan de l'encombrement, et sur le plan de la facilité d'utilisation.

Selon l'invention, un dispositif de transport est muni d'un crochet d'attelage apte à s'engager dans une ouverture prévue dans un timon d'attelage d'un autre dispositif de transport afin d'établir une liaison de remorquage entre l'un et l'autre dispositif de transport, le crochet d'attelage étant fixé au dispositif de transport par l'intermédiaire d'un agencement de coulissement de sorte que le crochet d'attelage puisse translater entre une position de remorquage en laquelle le crochet d'attelage est au plus éloigné d'un bord avant du dispositif de transport, et une position de rangement en laquelle le crochet d'attelage est au plus près du bord avant du dispositif de transport, caractérisé en ce que l'agencement de coulissement comprend une base coulissante à laquelle le crochet d'attelage est fixé et au moins un rail de guidage sur lequel la base coulissante peut coulisser, ainsi qu'une extrémité arrière et une extrémité avant définissant deux butées de coulissement pour respectivement la position de remorquage et la position de rangement du crochet d'attelage.

La position de remorquage permet à une chaîne de chariots de manutention de posséder un rayon de braquage relativement faible. Ainsi, la chaîne de chariots de manutention peut faire des demi-tours relativement serrés. La position de rangement permet à la chaîne de chariots de manutention d'occuper un espace relativement faible lorsque cette chaîne est en arrêt.

Il convient de noter que, dans un dispositif de transport conforme à l'invention, le crochet d'attelage peut librement coulisser entre la position de remorquage et la position de rangement lors d'une utilisation. Les extrémités arrière et avant de l'agencement de coulissement, qui définissant les deux butées de coulissement, maintiennent la base coulissante sur le ou les rails de guidage tout en permettant une libre translation de la base coulissante et le crochet d'attelage fixé à celle-ci.

Un mode de réalisation de l'invention comprend avantageusement une ou plusieurs des caractéristiques supplémentaires suivantes, lesquelles sont décrites dans les paragraphes suivants.

Le dispositif de transport comprend avantageusement un timon d'attelage ayant une ouverture pouvant accueillir un crochet d'un autre dispositif de transport afin d'établir une liaison de remorquage entre l'un et l'autre dispositif de transport.

Le dispositif de transport peut être sous forme d'un chariot de manutention apte à transporter des objets.

Une description détaillée en référence à des dessins illustre l'invention brièvement exposée précédemment, ainsi que les caractéristiques supplémentaires identifiées précédemment.

### DESCRIPTION SOMMAIRE DES DESSINS

- La figure 1 est un diagramme schématique illustrant une vue de côté d'un chariot de manutention.
- La figure 2 est un diagramme schématique illustrant une vue de dessus d'un timon d'attelage du chariot de manutention illustré à la figure 1.
- La figure 3 est un diagramme schématique illustrant une vue en plan d'un crochet d'attelage et d'un agencement de coulissement faisant partie du chariot de manutention illustré à la figure 1.
- La figure 4 est un diagramme schématique illustrant une vue de côté du crochet d'attelage et de l'agencement de coulissement.
- La figure 5 est un diagramme schématique illustrant une vue de côté d'une liaison de remorquage entre le chariot de manutention et un autre chariot de manutention, en laquelle le crochet d'attelage est en une position de remorquage.
- La figure 6 est un diagramme schématique illustrant une vue de côté d'une liaison de remorquage entre le chariot de manutention et un autre chariot de manutention, en laquelle le crochet d'attelage est en une position intermédiaire.
- La figure 7 est un diagramme schématique illustrant une vue de côté d'une liaison de remorquage entre le chariot de manutention et un autre chariot de manutention, en laquelle le crochet d'attelage est en une position de rangement.

### DESCRIPTION DETAILLEE

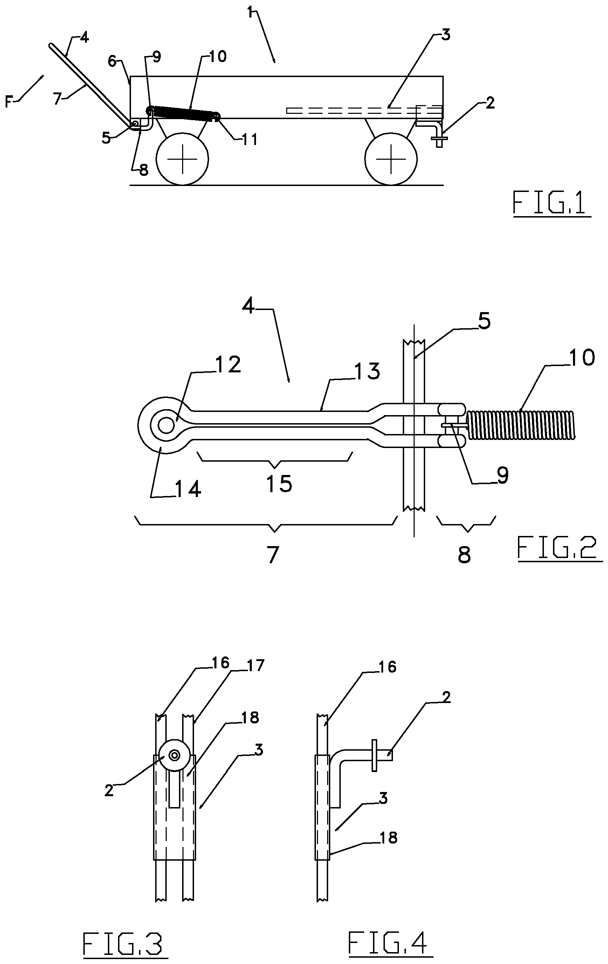

La figure 1 illustre schématiquement un chariot de manutention 1 par une vue de côté. Le chariot de manutention 1 est muni d'un crochet d'attelage 2. Le crochet d'attelage 2 est fixé au chariot de manutention 1 par l'intermédiaire d'un agencement de coulissement 3.

Le chariot de manutention 1 est également muni d'un timon d'attelage 4. Le timon d'attelage 4 est fixé au chariot de manutention 1 par l'intermédiaire d'un agencement d'articulation 5. L'agencement d'articulation 5 se situe près d'un bord avant 6 du chariot de manutention 1.

L'agencement d'articulation 5 divise, en quelque sorte, le timon d'attelage 4 en deux sections : une section saillante 7 et une section non saillante 8. La section saillante 7 est sensiblement droite. La section non saillante 8 est coudée et munie d'un point d'ancrage 9. Un ressort 10 relie ce point d'ancrage 9 à un point d'ancrage 11 sur le chariot de manutention 1. Le ressort 10 exerce une force de relevage sur le timon d'attelage 4 symbolisée par une flèche F à la figure 1. Par cette force, le timon d'attelage 4 adopte une position telle qu'illustrée à la figure 1 lorsque le timon d'attelage 4 est en état libre et aucune autre force n'est exercée sur le timon d'attelage 4.

La figure 2 illustre schématiquement et plus en détail le timon d'attelage 4 par une vue de dessus. Le timon d'attelage 4 comprend une ouverture 12 qui peut accueillir un crochet d'attelage d'un autre chariot de manutention 1. Dans cet exemple, le timon d'attelage 4 est sous forme d'une barre repliée 13. Cette barre repliée 13 comprend une section 14 sous forme d'un anneau. Cette section 14 définit l'ouverture 12 du timon d'attelage 4. La barre repliée 13 comprend également une section 15 avec deux parties droites en parallèle et rapprochées l'une à l'autre.

La figure 3 illustre schématiquement et plus en détail le crochet d'attelage 2 et l'agencement de coulissement 3 par une vue en plan. L'agencement de coulissement 3 comprend une paire de rails de guidage 16, 17 et une base coulissante 18. La base coulissante 18 est sous forme d'une boîte qui enveloppe les rails de guidage 16, 17. Le crochet d'attelage 2 est fixé sur la base coulissante 18.

La figure 4 illustre schématiquement le crochet d'attelage 2 et l'agencement de coulissement 3 par une vue de côté. Par conséquent, il n'y à qu'un seul rail de guidage 16 qui apparaît dans cette figure.

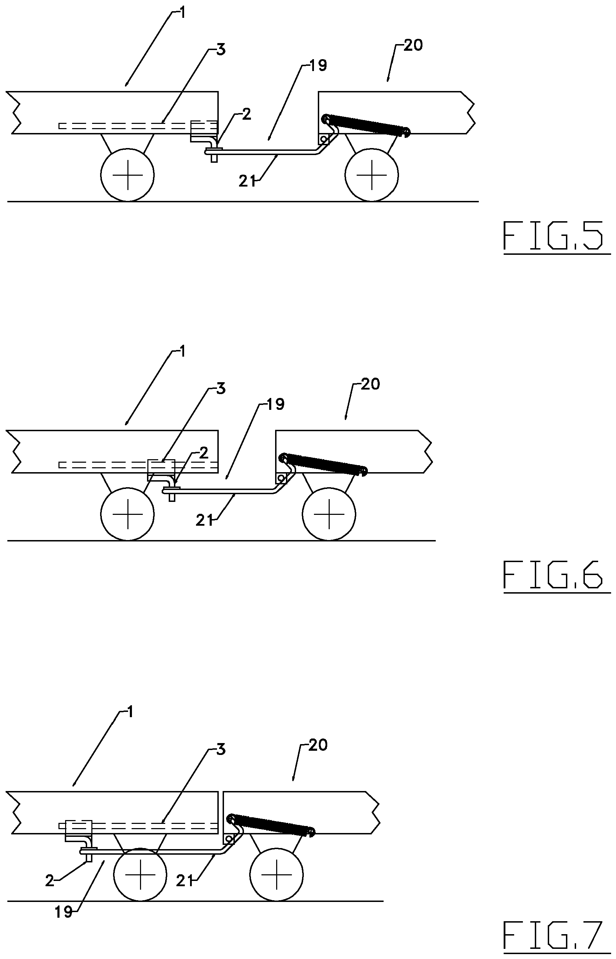

Les figures 5, 6, et 7 illustrent schématiquement une liaison de remorquage 19 entre le chariot de manutention 1 illustré à la figure 1 et un autre chariot de manutention 20 par une vue de côté. Dans ces figures, le crochet d'attelage 2 du chariot de manutention 1 illustré à la figure 1 s'est s'engagé dans une ouverture prévue dans un timon d'attelage 21 de l'autre chariot de manutention 20. La liaison de remorquage 19 est ainsi établie. Le timon d'attelage 21 de l'autre chariot de manutention 1 peut être similaire, par exemple, au timon d'attelage 4 illustré à la figure 2.

La figure 5 illustre schématiquement une situation où le crochet d'attelage 2 est en une position de remorquage. En cette position, le crochet d'attelage 2 est au plus éloigné du bord avant 6 du chariot de manutention 1 illustré à la figure 1. Le crochet d'attelage 2 se bute contre une extrémité arrière de l'agencement de coulissement 3.

La figure 6 illustre schématiquement une situation où le crochet d'attelage 2 est en une position intermédiaire. En cette position, le crochet d'attelage 2 peut coulisser dans deux directions opposées : dans une direction arrière et dans une direction avant.

La figure 7 illustre schématiquement une situation où le crochet d'attelage 2 est en une position de rangement. En cette position, le crochet d'attelage 2 est au plus près du bord avant 6 du chariot de manutention 1 illustré à la figure 1. Dans cette situation, le crochet d'attelage 2 peut éventuellement se buter contre une extrémité avant de l'agencement de coulissement 3.

Les figures 5, 6, et 7 illustrent donc schématiquement que le crochet d'attelage 2 puisse librement translater entre une position de remorquage en laquelle le crochet d'attelage 2 est au plus éloigné d'un bord avant 6 du chariot de manutention 1, et une position de rangement en laquelle le crochet d'attelage 2 est au plus près du bord avant 6 du chariot de manutention 1. La position de remorquage permet à une chaîne de chariots de manutention de posséder un rayon de braquage relativement faible. Ainsi, la chaîne de chariots de manutention peut faire des demi-tours relativement serrés. La position de rangement permet à la chaîne de chariots de manutention d'occuper un espace relativement faible lorsque cette chaîne est en arrêt.

### REMARQUES FINALES

La description détaillée en référence aux figures est simplement une illustration de l'invention. L'invention peut être réalisée de nombreuses façons différentes. Afin d'illustrer ceci, quelques alternatives sont indiquées sommairement.

L'invention peut être appliquée avantageusement dans de nombreux types de dispositifs de transport. Un chariot de manutention n'est qu'un exemple d'un tel dispositif de transport. De façon globale, le terme « dispositif de transport » doit être interprété de façon large. Ce terme embrasse toute entité apte à effectuer une fonction de transport. Par exemple, un dispositif tracteur constitue un dispositif de transport dans le contexte de la présente demande.

Il existe différentes façons de réaliser un agencement de coulissement. Les figures 3 et 4 illustrent simplement une réalisation parmi tant d'autres réalisations possibles. Par exemple, un agencement de coulissement peut comprendre qu'un seul rail de guidage. La base coulissante peut être sous forme, par exemple, d'un cylindre enveloppant ce rail de guidage.

Il existe différentes façons de réaliser un timon d'attelage. La figure 2 illustre simplement une réalisation parmi tant d'autres réalisations possibles. Il convient de noter qu'un dispositif de transport selon l'invention peut comprendre un timon d'attelage qui est fixé au dispositif de transport par l'intermédiaire d'un agencement de coulissement de sorte que le timon d'attelage puisse translater entre une position de remorquage en laquelle le timon d'attelage est au maximum sorti du dispositif de transport, et une position de rangement en laquelle le timon d'attelage est au maximum rentré dans le dispositif de transport.

Bien que les dessins montrent différentes entités fonctionnelles sous forme de différents blocs, ceci n'exclut nullement des implémentations où une seule entité physique effectue plusieurs fonctions, ou plusieurs entités physiques effectuent collectivement une seule fonction. A cet égard, les dessins sont très schématiques.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Dispositif de transport (1) muni d'un crochet d'attelage (2) apte à s'engager dans une ouverture (12) prévue dans un timon d'attelage (21) d'un autre dispositif de transport (20) afin d'établir une liaison de remorquage (19) entre l'un et l'autre dispositif de transport, le crochet d'attelage étant fixé au dispositif de transport par l'intermédiaire d'un agencement de coulissement (3) de sorte que le crochet d'attelage puisse translater entre une position de remorquage en laquelle le crochet d'attelage est au plus éloigné d'un bord avant (6) du dispositif de transport, et une position de rangement en laquelle le crochet d'attelage est au plus près du bord avant du dispositif de transport,
**caractérisé en ce que** :
le crochet d'attelage est orienté vers le bas et l'agencement de coulissement est disposé de sorte que, lorsque le crochet d'attelage s'est engagé dans l'ouverture prévue dans le timon d'attelage de l'autre dispositif de transport, au moins une partie du timon d'attelage se trouve en dessous du dispositif de transport, l'agencement de coulissement comprenant une base coulissante (18) à laquelle le crochet d'attelage est fixé et au moins un rail de guidage (16, 17) sur lequel la base coulissante peut coulisser, ainsi qu'une extrémité arrière et une extrémité avant définissant deux butées de coulissement pour respectivement la position de remorquage et la position de rangement du crochet d'attelage.

2. Dispositif de transport selon la revendication 1, comprenant un timon d'attelage (4) ayant une ouverture (12) pouvant accueillir un crochet d'attelage d'un autre dispositif de transport afin d'établir une liaison de remorquage (19) entre l'un et l'autre dispositif de transport.

3. Dispositif de transport selon l'une quelconque des revendications 1 à 2, le dispositif de transport (1) étant sous forme d'un chariot de manutention apte à transporter des objets.

## Patentansprüche

1. Transportvorrichtung (1), die mit einem Anhängehaken (2) versehen ist, der imstande ist, in eine Öffnung (12) eingeführt zu werden, die in einer Anhängedeichsel (21) einer anderen Transportvorrichtung (20) vorgesehen ist, um eine Abschleppverbindung (19) zwischen der einen und der anderen Transportvorrichtung aufzubauen, wobei der Anhängehaken anhand einer Gleitanordnung (3) an der Transportvorrichtung befestigt ist, sodass sich der Anhängehaken zwischen einer Abschleppposition, in der der Anhängehaken am weitesten von einem vorderen Rand (6) der Transportvorrichtung entfernt ist, und einer Verstauposition verschieben lässt, in der der Anhängehaken am nächsten zu dem vorderen Rand der Transportvorrichtung ist,
**dadurch gekennzeichnet, dass**:
der Anhängehaken nach unten ausgerichtet ist und die Gleitanordnung derart angeordnet ist, dass, wenn der Anhängehaken in die Öffnung, die in der Anhängedeichsel der anderen Transportvorrichtung vorgesehen ist, eingeführt wird, sich mindestens ein Teil der Anhängedeichsel unterhalb der Transportvorrichtung befindet, wobei die Gleitanordnung eine gleitende Basis (18) umfasst, an der der Anhängehaken befestigt ist, und mindestens eine Führungsschiene (16, 17), auf der die gleitende Basis gleiten kann, sowie ein hinteres Ende und ein vorderes Ende, welche zwei Gleitanschläge für jeweils die Abschleppposition und die Verstauposition des Anhängehakens definieren.

2. Transportvorrichtung nach Anspruch 1, eine Anhängedeichsel (4) umfassend, die eine Öffnung (12) aufweist, welche einen Anhängehaken einer anderen Transportvorrichtung aufnehmen kann, um eine Abschleppverbindung (19) zwischen der einen und der anderen Transportvorrichtung aufzubauen.

3. Transportvorrichtung nach einem der Ansprüche 1 bis 2, wobei die Transportvorrichtung (1) in Form eines Transportwagen ist, das imstande ist, Gegenstände zu transportieren.

## Claims

1. A transport device (1) equipped with a towing hook (2) that can be inserted into an opening (12) provided in a drawbar (21) of another transport device (20) in order to establish a towing connection (19) between the two transport devices, the towing hook being secured to the transport device by means of a sliding arrangement (3) such that the towing hook can move between a towing position in which the towing hook is furthest from a front edge (6) of the transport device, and a stowed position in which the towing hook is closest to the front edge of the transport device,
**characterised in that**:
the towing hook is oriented downwards and the sliding arrangement is arranged in such a way that, when the towing hook is inserted into the opening provided in the drawbar of the other transport device, at least one portion of the drawbar is under the transport device, the sliding arrangement comprising a sliding base (18) to which the towing hook is secured and at least one guide rail (16, 17) where on the sliding base can slide, as well as a rear end and a front end defining two sliding abutments for respectively the towing position and the stowing position of the towing hook.

2. A transport device according to claim 1, comprising a drawbar (4) having an opening (12) able to receive a towing hook of another transport device in order to establish a towing connection (19) between the two transport devices.

3. A transport device according to any of claims 1 to 2, the transport device (1) being in the form of a handling trolley able to transport objects.
